# EUROPEAN PATENT APPLICATION

(11) **EP 2 930 630 A1**
(43) Date of publication of application: **14.10.2015**
(21) Application number: 15158422.4
(22) Date of filing: 10.03.2015
(51) Int. Cl.: G06F 17/30

(54) **Read determination device, read determination method, and read determination program**

(30) Priority: 09.04.2014 JP 2014080288
(71) Applicant: FUJITSU LIMITED, Kawasaki-shi, Kanagawa 211-8588 (JP)
(72) Inventor: Taguchi, Akinori, Kawasaki-shi, Kanagawa 211-8588 (JP); Yu, Shanshan, Kawasaki-shi, Kanagawa 211-8588 (JP)
(74) Representative: Ward, James Norman

(57) **Abstract**

A read determination device includes: an evaluation unit that evaluates readability of a document that is a read determination target; a change unit that changes a criterion that is used for read determination in accordance with an evaluation result by the evaluation unit; and a determination unit that determines whether or not the document that is the determination target has already been read, using the criterion that is changed by the change unit.

## Description

### FIELD

The embodiments discussed herein are related to a read determination device, a read determination method, and a read determination program.

### BACKGROUND

An opportunity has been increased that a user uses a document of digital data. As such a document, for example, there is a document on the Web, an email, a document in social networking service (SNS), an electronic book, or the like. Some of these documents expect a user to read and grasp the content. For example, when the user does not read a received email properly and does not grasp the content, communication is not established as intended.

Therefore, there has been proposed a technique that determines whether or not the user has read a document. For example, there is a mailer which determines that an email has been read when the opening operation has been performed on the email.

In addition, there is a technique which determines that a document has been read when a display time of the document is a time which is desired to understand the document or longer.

Japanese Laid-open Patent Publication No. 2012-181663, Japanese Laid-open Patent Publication No. 07-319852, Japanese Laid-open Patent Publication No. 2002-352221, Japanese Laid-open Patent Publication No. 2004-334699, Japanese Laid-open Patent Publication No. 2009-32240 are examples of the related art.

It is assumed in the above-described technologies that documents are read at a same speed. However, the readability may be different depending on a document due to various factors. For example, it is difficult to read a document having small characters, and it takes a long time to read the document. Therefore, when it is assumed that documents are read at the same speed, there may be a case where it is determined, if the readability of the document is low, by mistake that a document has been read even though the user has not read the document in actuality.

According to an embodiment, it is desired to provide a read determination device, a read determination method, and a read determination program that accurately determine whether or not a document has been read.

### SUMMARY

According to an aspect of the invention, a read determination device includes: an evaluation unit that evaluates readability of a document that is a read determination target; a change unit that changes a criterion that is used for read determination in accordance with an evaluation result by the evaluation unit; and a determination unit that determines whether or not the document that is the determination target has already been read, using the criterion that is changed by the change unit.

### BRIEF DESCRIPTION OF DRAWINGS

FIG. 1 is a diagram illustrating an example of a functional configuration of a read determination device;
FIG. 2 is a diagram illustrating an example of document data;
FIG. 3 is a diagram illustrating an example in which a document of the document data is displayed;
FIG. 4 is a diagram illustrating an example of criterion data;
FIG. 5 is a diagram illustrating a further example of the criterion data;
FIG. 6 is a diagram illustrating a further example of the criterion data;
FIG. 7 is a diagram illustrating a further example of the criterion data;
FIG. 8 is a diagram illustrating an example of document data to which a blurring amount is set;
FIG. 9 is a diagram illustrating a further example of the criterion data;
FIG. 10 is a diagram illustrating a further example of the criterion data;
FIG. 11 is a flowchart illustrating an example of a procedure of criterion setting processing;
FIG. 12 is a flowchart illustrating an example of a procedure of read determination processing;
FIG. 13 is a block diagram illustrating a functional configuration of a read determination device;
FIG. 14 is a flowchart illustrating an example of a procedure of read determination processing;
FIG. 15 is a diagram illustrating an example of criterion data;
FIG. 16 is a diagram illustrating an example of document data in which a language is set;
FIG. 17 is a flowchart illustrating an example of a procedure of criterion setting processing;
FIG. 18 is a block diagram illustrating a functional configuration of a read determination device;
FIG. 19 is a diagram illustrating an example of criterion data;
FIG. 20 is a flowchart illustrating an example of a procedure of read determination processing; and
FIG. 21 is a diagram illustrating a computer that executes a read determination program.

### DESCRIPTION OF EMBODIMENTS

A read determination device, a read determination method, and a read determination program according to embodiments are described below in detail with reference to drawings. The technology discussed herein is not limited to such embodiments. In addition, the embodiments may be combined within a range in which processing contents are not conflicted with each other.

### [Embodiment 1]

### [Configuration of Read Determination Device]

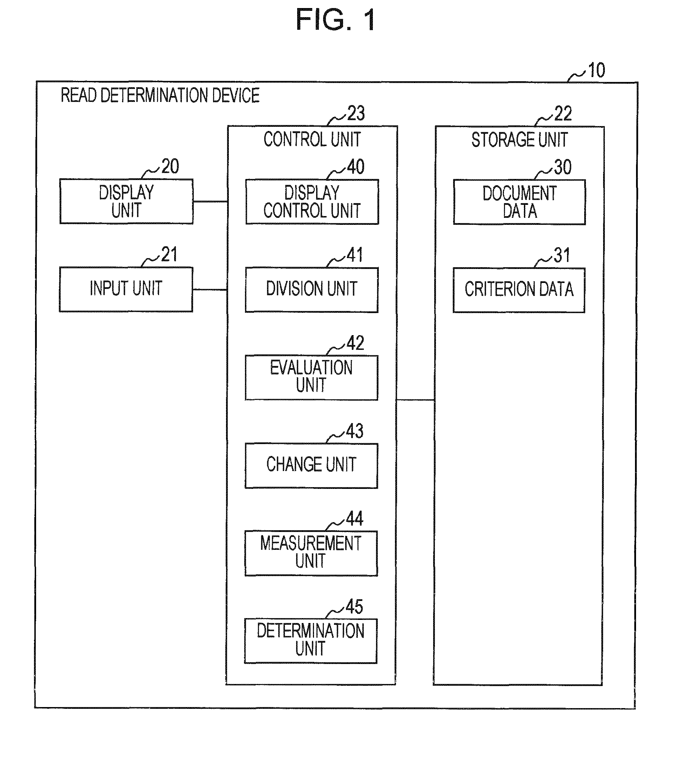

A read determination device 10 according to Embodiment 1 is described below. FIG. 1 is a diagram illustrating an example of a functional configuration of a read determination device. The read determination device 10 is a device that may determine whether or not the user has read a displayed document. The read determination device 10 may be, for example, an information processing device such as a desktop-type personal computer (PC) or a note-type PC. Alternatively, the read determination device 10 may be, for example, a mobile terminal device such as a tablet terminal, a smartphone, a personal digital assistant (PDA), or a wearable terminal of glasses type or the like. As illustrated in FIG. 1, the read determination device 10 includes a display unit 20, an input unit 21, a storage unit 22, and a control unit 23. The read determination device 10 may include a further unit in addition to the above-described units.

The display unit 20 is a display device that displays various pieces of information. As the display unit 20, there is a display device such as a liquid crystal display (LCD). The display unit 20 displays various pieces of information. For example, the display unit 20 displays a document that is a read determination target.

The input unit 21 is an input device through which various pieces of information are input. For example, as the input unit 21, there are input devices such as a keyboard, a mouse, various buttons that are arranged on the read determination device 10, and a transmission-type touch sensor that is arranged on the display unit 20. In the example of the functional configuration of the read determination device 10 in FIG. 1, the display unit 20 and the input unit 21 are illustrated separately, but for example, a device such as a touch-screen having a configuration in which the display unit 20 and the input unit 21 are provided integrally may be employed.

The storage unit 22 is a storage device such as a semiconductor memory element of a flash memory or the like, a hardware disk, or an optical disk. The storage unit 22 may be a semiconductor memory in which data is rewritable such as a random access memory (RAM) or a flash memory.

The storage unit 22 stores an operating system (OS) and various programs that are executed by the control unit 23. In addition, the storage unit 22 stores various pieces of data that are used for the programs executed by the control unit 23. For example, the storage unit 22 stores document data 30 and criterion data 31.

The document data 30 is digital data of a document whose content is to be read and grasped by the user. In the embodiment, the document that is indicated by the document data 30 is a document that is a read determination target. In the embodiment, the example is described below in which it is determined whether or not the document of the document data 30 that is stored in the storage unit 22 has been read, but may be determined whether or not a document that has been received from an external device through a network has been read. For example, it may be determined whether or not a document of a web, an email, SNS, an electronic book, or the like that has been received from the external device has been read. In addition, it may be determined whether or not an image that has been obtained by capturing an actual book, notice, or the like, through a camera has been read.

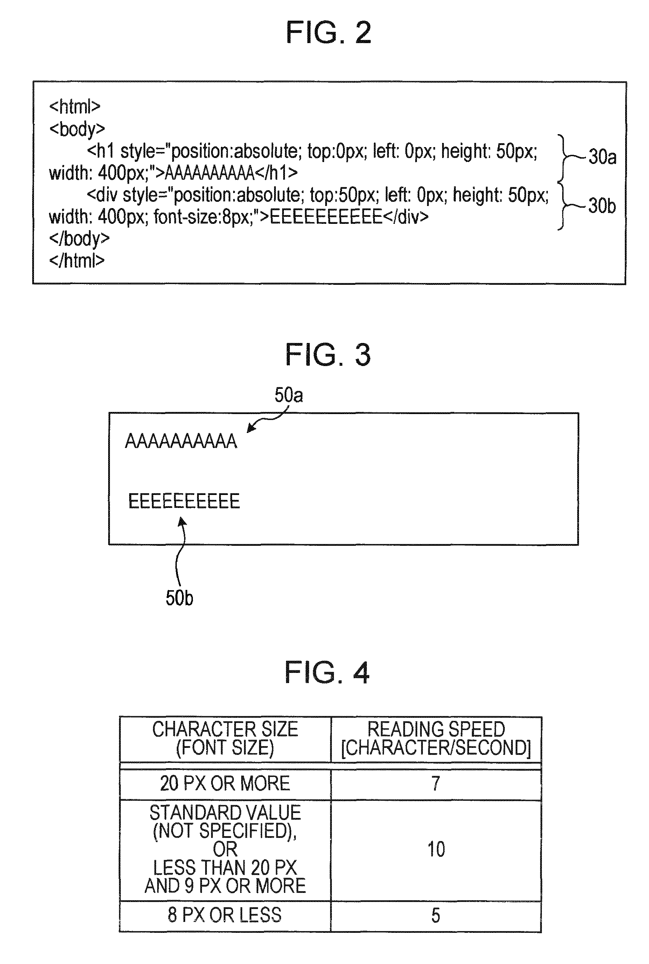

FIG. 2 is a diagram illustrating an example of the document data. In FIG. 2, an example is illustrated in which the document data 30 corresponds to, for example, a document that is described using a markup language such as Hyper Text Markup Language (HTML). In the document data 30, sentences that constitute the document and various pieces of definition that indicate how these sentences are displayed are included. For example, in a portion 30a of the document data 30, definition that is used to display "AAAAAAAAAA" is descried. In addition, in a portion 30b of the document data 30, definition that is used to display "EEEEEEEEEE" using a font size having 8 pixels (px) is described. Here, in the portion 30a, definition of a font size is omitted. When the definition of a font size is omitted, it is determined that the font sized is not specified, and the characters are displayed using a font size of a standard value. In the embodiment, the font size of the standard value is 10px.

FIG. 3 is a diagram illustrating an example in which a document of the document data is displayed. The example of FIG. 3 indicates the state in which the document data 30 illustrated in FIG. 2 is displayed. In the example of FIG. 3, the sentence "AAAAAAAAAA" is displayed in an area 50a using the font size of 10px. In addition, in the example of FIG. 3, the sentence "EEEEEEEEEE" is displayed in an area 50b using the font size of 8px.

The criterion data 31 is data that stores information that is a reference for read determination of the document. In the criterion data 31, information that is reference for read determination is stored for each readability degree of the document. In the embodiment, the readability of the document is evaluated based on an appearance when the document is displayed. In the embodiment, for example, a case is described below in which the character size is used as the appearance when the document is displayed. The criterion data 31 may be provided for each user, provided for each user group, or used for the entire device. In the embodiment, an example is described below in which a single piece of criterion data 31 is used for the entire device.

FIG. 4 is a diagram illustrating an example of the criterion data. The criterion data 31 may employ a table in which items such as "character size" and "reading speed" are associated with each other. The item of "character size" is an area that stores information that indicates the size of a character. In the embodiment, as "character size", a font size is used. The item of "reading speed" is an area that stores information that indicates the reading speed when characters having the character size that has been set to the item of "character size" are read. In the embodiment, as "reading speed", the number of characters that are read per second [character/second] is used.

In the example of FIG. 4, it is indicated that seven characters may be read per second when the character size is 20px or more. In addition, it is indicated that 10 characters may be read per second when the character size is the standard value, or less than 20px and 9px or more. The standard value is a standard character size that has been set in the system such as the OS or cascading style sheets (CSS). In addition, it is indicated that five characters may be read per second when the character size is 8px or less. The setting of FIG. 4 is merely an example, and a relationship between the range of the font and the reading speed may be set more finely.

Here, when characters that are displayed on the screen are small, it is difficult for the user to determine the characters, so that the reading speed is reduced. In addition, when characters that are displayed on the screen are too large, an amount of movement of a sight line is increased for the user to grasp each of the characters, so that the reading speed is reduced. Therefore, in the embodiment, the reading speed for each character size is stored in the criterion data 31.

A document may have notes, different from the main body thereof, in which the description is made with smaller font, because it is sufficient for the notes to be checked as appropriate. Therefore, read determination may not be performed on characters the size of which is a certain value or less. For example, zero character per second may be set to the reading speed for characters the size of which is 5px or less in order to indicate that read determination is not performed on those characters, and the read determination may not be performed when the reading speed is zero character per second.

Further referring to FIG. 1, the control unit 23 is a device that controls the read determination device 10. As the control unit 23, an electronic circuit such as a central processing unit (CPU) and a micro processing unit (MPU), or an integrated circuit such as an application specific integrated circuit (ASIC) and a field programmable gate array (FPGA) may be employed. The control unit 23 includes an internal memory that is used to store control data and programs in which various processing procedures are defined, and executes various pieces of processing using the programs and control data. Various programs are operated in the control unit 23, and function as various processing units. For example, the control unit 23 includes a display control unit 40, a division unit 41, an evaluation unit 42, a change unit 43, a measurement unit 44, and a determination unit 45.

The display control unit 40 performs various types of display control of screens on the display unit 20. For example, when a display instruction for the document data 30 is input to the input unit 21, the display control unit 40 causes the display unit 20 to display a document that is indicated by the document data 30.

The division unit 41 performs various types of division. For example, the division unit 41 divides the document that is indicated by the document data 30 into areas in each of which the read determination is performed. As such a division method, for example, there is a method of using tag information such as <p> and <div> of HTML. In the embodiment, a case is described below in which division of the document is performed using the tag information such as <p> and <div> of HTML, but the position at which the division of the document is performed is not limited to such an example. For example, the division unit 41 may divide the document under such division conditions as a certain delimiter of line break or the like, the certain number of characters, and a certain display size.

The evaluation unit 42 performs various types of evaluation. For example, the evaluation unit 42 evaluates readability of the document for each of the divided areas of the document. For example, the evaluation unit 42 reads information on the appearance when the document is displayed, for each of the divided areas of the document. In addition, the evaluation unit 42 evaluates the readability of the document, based on the information on the appearance for each of the divided areas of the document. In the embodiment, the evaluation unit 42 reads the character size as the information on the appearance for each of the divided areas of the document. When the standard value is set to the character size, the evaluation unit 42 reads, for example, the font size of the standard value that has been set in the system such as the OS or CSS. The information of the CSS may be obtained, for example, using a "getComputedStyle" function or the like of JavaScript (registered trademark). When the standard value is set to the character size, the evaluation unit 42 obtains the font size of the standard value from the information of the CSS. In the embodiment, it is assumed that the font size of the standard value is 10px. In addition, for each of the divided areas of the document, the evaluation unit 42 reads the reading speed that corresponds to the character size of the area, from the criterion data 31.

The change unit 43 performs various types of change. For example, the change unit 43 changes a criterion that is used for the read determination in accordance with the evaluation result by the evaluation unit 42. For example, the change unit 43 counts the number of characters for each of the areas of the document. In addition, for each of the areas of the document, the change unit 43 divides the number of characters of the area by the reading speed of the area to obtain a reading time. The change unit 43 obtains the total reading time by combining reading times of the areas of the document, and sets the obtained total reading time as a criterion that is used for the read determination.

The measurement unit 44 performs various types of measurement. For example, the measurement unit 44 measures a display time during which the document of the document data 30 is displayed on the display unit 20.

The determination unit 45 performs various types of determination. For example, the determination unit 45 determines whether or not the document of the document data 30 has been read, using the criterion that has been changed by the change unit 43. For example, the determination unit 45 determines that the document of the document data 30 has been read by the user when the display time that has been measured by the measurement unit 44 is the total reading time or more, which has been set as the criterion, and determines that the document of the document data 30 has not been read by the user when the display time is less than the total reading time. Such a determination result may be stored with the document data 30, and may be notified to a provider or the like of the document data 30, who seeks the determination result.

The appearance of the document, which is used to evaluate the readability of the document, is not limited to the character size, and anything that affects the readability of the document may be included as the appearance of the document. For example, the appearance of the document, which is used to evaluate the readability of the document, includes contrast, a typeface, a spatial frequency, character spacing, line spacing, line length, margin, layout, line direction, and screen resolution.

For example, when the contrast between a character that is displayed on the screen and the background is low, it is difficult for the user to determine the character, so that the reading speed is reduced. Therefore, the criterion data 31 may have such setting that the reading speed is reduced as the contrast becomes low.

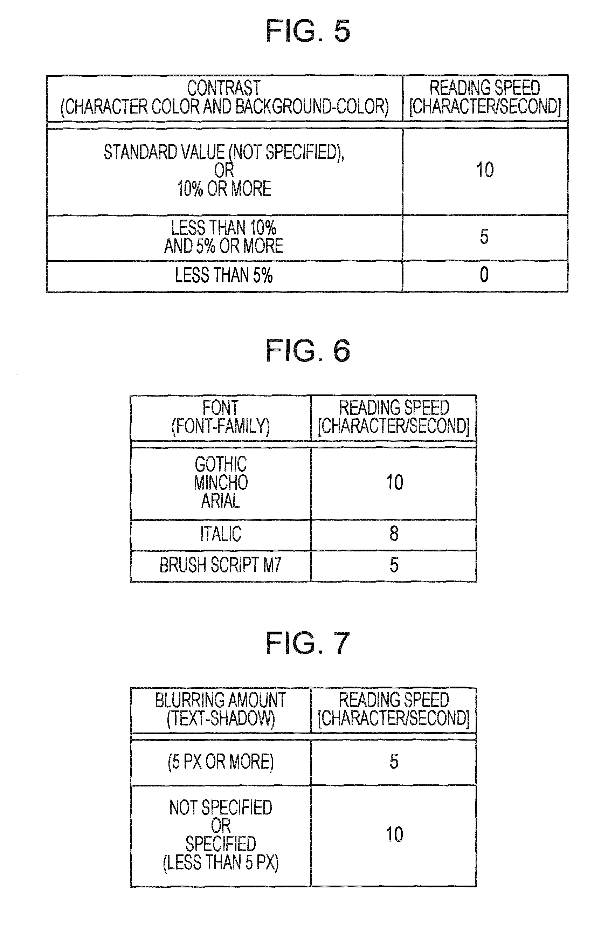

FIG. 5 is a diagram illustrating a further example of the criterion data. FIG. 5 is an example of the criterion data 31 when the appearance of a document, which is used to evaluate the readability of the document, is "contrast". The criterion data 31 illustrated in FIG. 5 is a table in which items such as "contrast" and "reading speed" are associated with each other. The item of "contrast" is an area that stores the contrast between a character color and a background color of the document. The item of "reading speed" is an area that stores information that indicates the reading speed when the characters having the contrast that has been set to the item of "contrast" are read.

In the example of FIG. 5, it is indicated that 10 characters may be read per second when the contrast is a standard value, or 10% or more. Such a standard value corresponds to standard contrast that has been set in the system such as the OS and CSS. In addition, it is indicated that five characters may be read per second when the contrast is 5% or more and less than 10%. In addition, the reading speed corresponds to zero character per second when the contrast is less than 5%, so that it is indicated that the read determination is not performed.

For each of the divided areas of the document, the evaluation unit 42 may evaluate the readability of the document, from the contrast between the character color and the background color of the document in the area, based on the criterion data 31 illustrated in FIG. 5.

In addition, for example, it is difficult for the user to determine a character that has been displayed on the screen depending on a typeface of the character, so that the reading speed is reduced. Therefore, the reading speed for each typeface may be set to the criterion data 31.

FIG. 6 is a diagram illustrating a further example of the criterion data. FIG. 6 is an example of the criterion data 31 when the appearance of a document, which is used to evaluate the readability of the document, is "typeface". The criterion data 31 illustrated in FIG. 6 is a table in which items such as "typeface" and "reading speed" are associated with each other. The item of "typeface" is an area that stores the typeface of the character. The item of "reading speed" is an area that stores information that indicates the reading speed when the characters having the typeface that has been set to the item of "typeface" are read.

In the example of FIG. 6, it is indicated that 10 characters may be read per second when the typeface is "Gothic", "Mincho", or "Arial". In addition, it is indicated that eight characters may be read per second when the typeface is "Italic". In addition, it is indicated that five characters may be read per second when the typeface is "Brush Script M7".

For each of the divided areas of the document, the evaluation unit 42 may evaluate the readability of the document, from the typeface of the document in the area, based on the criterion data 31 illustrated in FIG. 6.

In addition, for example, when the space frequency of the character that has been displayed on the screen is changed, and blurring occurs on the character, it is difficult for the user to determine the character, so that the reading speed is reduced. Therefore, the criterion data 31 may have setting in which the reading speed is reduced as the space frequency becomes low and the range of blurring becomes large.

FIG. 7 is a diagram illustrating a further example of the criterion data. FIG. 7 is an example of the criterion data 31 when the appearance of a document, which is used to evaluate the readability of the document, is "blurring amount". The criterion data 31 illustrated in FIG. 7 is a table in which items such as "blurring amount" and "reading speed" are associated with each other. The item of "blurring amount" is an area that stores the size in which the character is blurred with a pixel. The item of "reading speed" is an area that stores information that indicates the reading speed when the characters having the blurring amount that has been set to the item of "blurring amount" are read.

In the example of FIG. 7, it is indicated that five characters may be read per second when the blurring amount is 5px or more. In addition, it is indicated that 10 characters may be read per second when the blurring amount is a standard value or less than 5px. Such a standard value is a standard blurring amount that has been set in the system such as the OS and CSS.

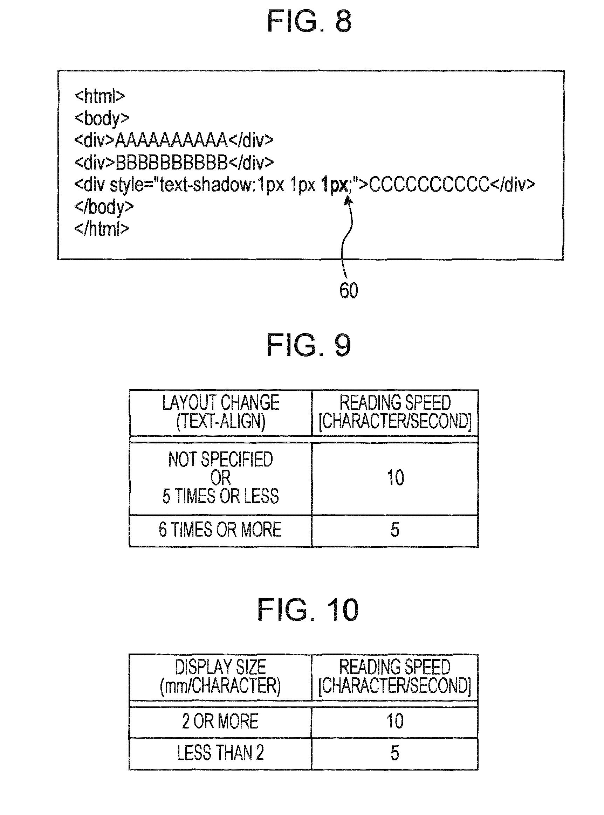

The blurring amount of the character is set to the document data 30 as appropriate. FIG. 8 is a diagram illustrating an example of document data to which a blurring amount is set. In the example of FIG. 8, the blurring amount is set with 1px in an area 60.

For each of the divided areas of the document, the evaluation unit 42 may evaluate the readability of the document, from the blurring amount of the document in the area, based on the criterion data 31 illustrated in FIG. 7.

In addition, for example, when the interval between characters in the vertical direction or the interval between characters in the horizontal direction is narrow, it is difficult for the user to determine the characters, so that the reading speed is reduced. Therefore, the criterion data 31 may have setting in which the reading speed is reduced as the character spacing, line spacing, line length, margin, or the like, becomes narrow.

In addition, for example, in a case in which writing start positions of the sentences are irregular in the document, the start position of the sight line is changed when the user reads the sentences, so that the reading speed is reduced. Therefore, the criterion data 31 may have setting in which the reading speed is reduced in accordance with the number of layout changes of the document.

FIG. 9 is a diagram illustrating a further example of the criterion data. FIG. 9 is an example of the criterion data 31 when the appearance of a document, which is used to evaluate the readability of a document, is "layout of the document". The criterion data 31 illustrated in FIG. 9 is a table in which items such as "layout change" and "reading speed" are associated with each other. The item of "layout change" is an area that stores the number of layout changes in the document. For example, the number of changes in the position of the sentences such as left, center, or right-justification is counted as the number of layout changes. The item of "reading speed" is an area that stores information that indicates the reading speed when the document in which the layout is changed by the number of times that has been set to the item of "layout change" is read.

In the example of FIG. 9, it is indicated that 10 characters may be read per second when the number of layout changes corresponds to "not specified" or five or less. In addition, it is indicated that five characters may be read per second when the number of layout changes is six or more.

For each of the divided areas of the document, the evaluation unit 42 may evaluate the readability of the document from the number of layout changes, based on the criterion data 31 illustrated in FIG. 9.

In addition, for example, when the screen resolution of the document is high, it is difficult for the user to determine the characters because the characters are displayed small, so that the reading speed is reduced. For example, in a case in which a character size S is 10 [px/character], when a screen resolution R is 100, the size of the single character is 2.54 [mm/character] (= S/R). When the screen resolution R is 300, the size of the single character is 0.85 [mm/character] (= S/R). Therefore, the criterion data 31 may have setting in which the reading speed is reduced in accordance with screen resolution. For example, the criterion data 31 may have setting in which the reading speed is reduced in accordance with the display size of the character, which is obtained from the screen resolution.

FIG. 10 is a diagram illustrating a further example of the criterion data. FIG. 10 is an example of the criterion data 31 when the appearance of a document, which is used to evaluate the readability of the document, is "display size". The criterion data 31 illustrated in FIG. 10 is a table in which items such as "display size" and "reading speed" are associated with each other. The item of "display size" is an area that stores the size of the character that is to be displayed. The item of "reading speed" is an area that stores information that indicates the reading speed when the document of the character having the size that has been set to the item of "display size" is read.

In the example of FIG. 10, it is indicated that 10 characters may be read per second when the character is 2 [mm/character] or more. In addition, it is indicated that five characters may be read per second when the character is less than 2 [mm/character].

For each of the divided areas, the evaluation unit 42 may evaluate the readability of the document, from the display size of the character of the document, based on the criterion data 31 illustrated in FIG. 10.

In addition, the evaluation unit 42 may evaluate the readability of the document by combining a plurality of pieces of information on the appearance of the document. For example, the evaluation unit 42 may evaluate the readability of the document by combining a part or all of the character size, contrast, typeface, spatial frequency, character spacing, line spacing, line length, margin, layout, line direction, and screen resolution.

### [Operation of Device]

An example of the detailed operation when the read determination device 10 according to the embodiment determines whether or not the displayed document has been read is described below.

For example, when the document illustrated in FIG. 3 is displayed, the evaluation unit 42 reads the reading speed having 10 [character/second] because the character size of the area 50a is 10px. The change unit 43 calculates the reading time of the area 50a as one second because the number of characters of the area 50a is 10 characters. In addition, the evaluation unit 42 reads the reading speed having five [character/second] because the character size of the area 50b is 8px. The change unit 43 calculates the reading time of the area 50b as two seconds because the number of characters of the area 50b is 10 characters. As a result, the change unit 43 sets three seconds that correspond to the total reading time that is obtained by combining the reading times for the areas, as a criterion that is used for the read determination.

The measurement unit 44 measures a display time during which the document is displayed on the display unit 20. When the display time satisfies the criterion, the determination unit 45 determines that the displayed document has been read by the user. In the example of FIG. 3, when the display time is three seconds or more, the determination unit 45 determines that the displayed document has been read by the user.

### [Flow of Processing]

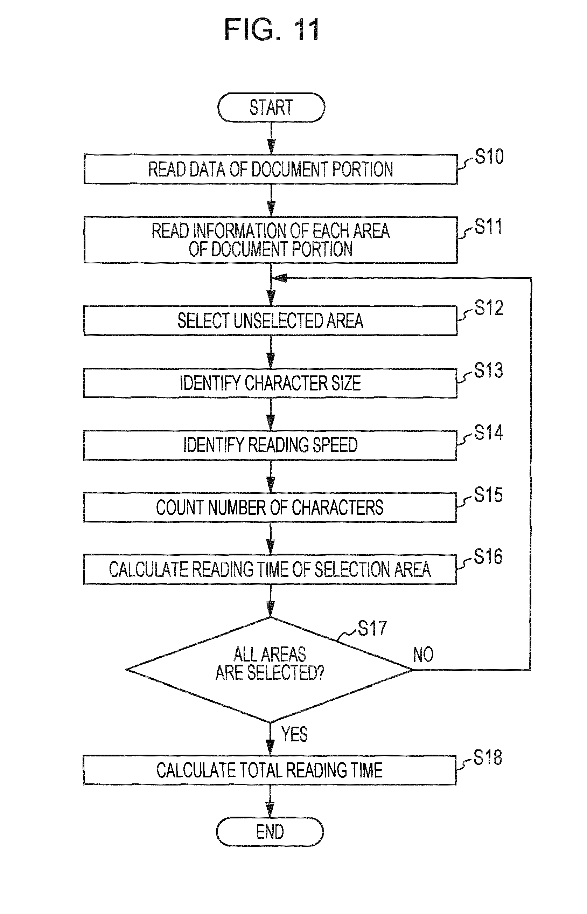

Flows of various pieces of processing that are executed by the read determination device 10 according to the embodiment are described below. First, a flow of criterion setting processing in which the read determination device 10 according to the embodiment sets a criterion is described. FIG. 11 is a flowchart illustrating an example of a procedure of the criterion setting processing. Such criterion setting processing is executed at certain timing, for example, timing at which a display instruction for the document data 30 has been executed.

As illustrated in FIG. 11, the evaluation unit 42 reads data of the document portion of the document data 30 (S10). For example, the evaluation unit 42 reads data of an area of a <body> tag of the document data 30. In addition, the evaluation unit 42 reads information of each of the divided areas of the document portion (S11). For example, the evaluation unit 42 reads data of each of the areas of <h> and <div> tags of the document data 30.

The evaluation unit 42 selects one of the unselected areas (S12). For example, the evaluation unit 42 selects one of the unselected areas, in order from the beginning side of the document. The evaluation unit 42 identifies the character size of the selected area, from the information on the area (S13). In addition, the evaluation unit 42 reads the reading speed that corresponds to the character size of the area, from the criterion data 31 (S14).

The change unit 43 counts the number of characters in the area, from the information on the selected area (S15). The change unit 43 divides the number of characters of the selected area by the reading speed of the area to calculate the reading time (S16). The change unit 43 determines whether or not all of the areas of the document portion have been selected (S17). When not all of the areas have been selected (No in S17), the flow proceeds to the above-described processing of S12.

On the other hand, when all of the areas of the document portion have been selected (Yes in S17), the change unit 43 calculates the total reading time by combining the reading times of the areas of the document, and sets the total reading time as a criterion (S18), and the processing ends.

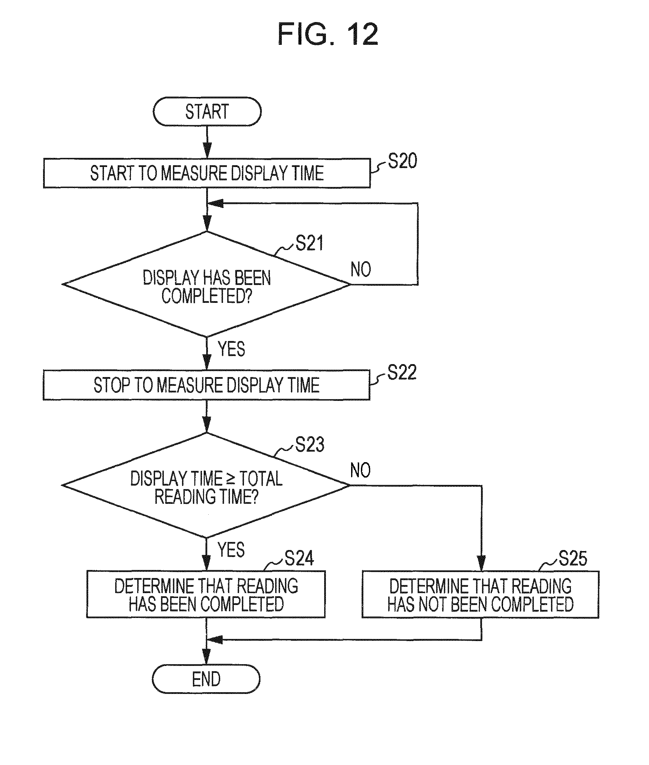

A flow of read determination processing is described below in which the read determination device 10 according to the embodiment determines whether or not the displayed document has been read by the user. FIG. 12 is a flowchart illustrating an example of a procedure of the read determination processing. Such read determination processing is executed at certain timing, for example, timing at which a display instruction for the document data 30 has been executed.

As illustrated in FIG. 12, the measurement unit 44 starts to measure a display time (S20). The measurement unit 44 determines whether or not the display of the document has been completed (S21). When the display of the document has not been completed (No in S21), again, the flow proceeds to S21, and the measurement unit 44 waits for the completion of the display of the document.

On the other hand, when the display of the document has been completed (Yes in S21), the measurement unit 44 stops to measure the display time (S22). The determination unit 45 determines whether or not the display time that has been measured by the measurement unit 44 is the total reading time or more, which has been obtained by the above-described criterion setting processing (S23). When the display time is the total reading time or more (Yes in S23), the determination unit 45 determines that the document of the document data 30 has been read by the user (S24), and the processing ends. In this case, for example, a read determination result such as "Reading has been completed correctly" may be displayed.

On the other hand, when the display time is less than the total reading time (No in S23), the determination unit 45 determines that the document of the document data 30 has not been read by the user (S25), and the processing ends. In this case, for example, a read determination result such as "Reading has not been completed correctly" may be displayed.

In the embodiment, the case is described in which measurement of the display time of the document is included in the read determination processing, but the embodiment is not limited to the case. When the measurement of the display time of the document is performed as a further piece of processing, the read determination processing may be executed at timing at which the display of the document is completed.

### [Effects]

As described above, the read determination device 10 according to the embodiment evaluates the readability of the document that is the read determination target. The read determination device 10 changes a criterion that is used for the read determination in accordance with the evaluation result. The read determination device 10 determines whether or not the document that is the determination target has been read, using the changed criterion. As a result, the read determination device 10 may accurately determine whether the document that is the read determination target has been read.

In addition, the read determination device 10 according to the embodiment evaluates the readability of the document based on the appearance when the document that is the determination target is displayed. As a result, the read determination device 10 may accurately evaluate the readability of the document that is the determination target.

In addition, the read determination device 10 according to the embodiment divides the document that is the read determination target into a plurality of areas. The read determination device 10 evaluates the readability of the document, for each of the divided areas. The read determination device 10 changes the criterion for each of the divided areas and determines whether or not the document has been read for each of the areas, using the criterion that corresponds to the area. As a result, the read determination device 10 may determine whether or not the document has been read by the user even when the readability of the document is different for each of the divided areas.

### [Embodiment 2]

Embodiment 2 is described below. In Embodiment 2, a case is described below in which whether or not a document that is a read determination target has been read is determined by measuring a gazing time during which the user gazes at the document, for each area of the document.

### [Configuration of Read Determination Device]

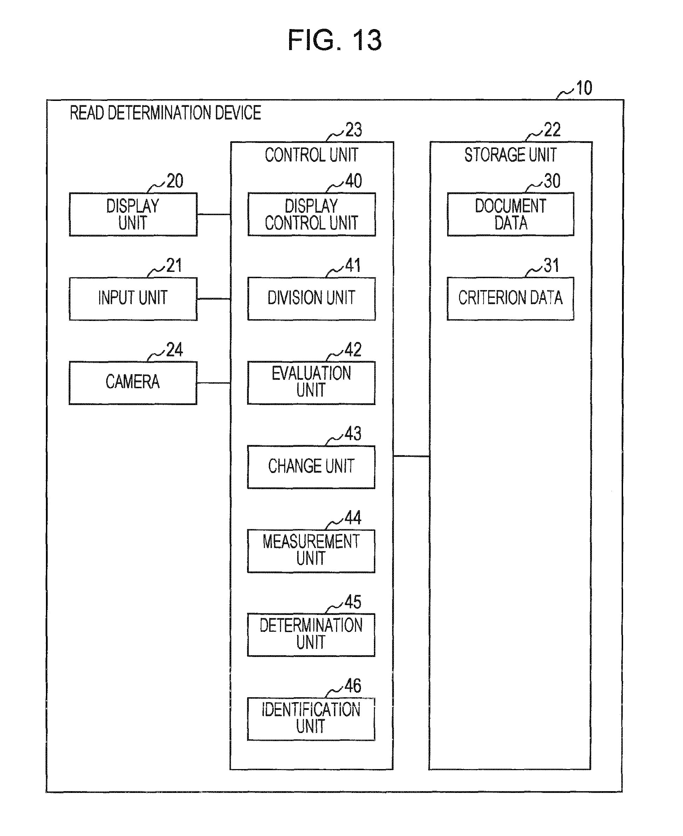

A read determination device 10 according to Embodiment 2 is described below. FIG. 13 is a block diagram illustrating a functional configuration of the read determination device. The same symbol is assigned to a portion that is similar to that of the read determination device 10 illustrated in FIG. 1, and a portion that is different from the read determination device 10 illustrated in FIG. 1 is mainly described below. As illustrated in FIG. 13, the read determination device 10 further includes a camera 24. In addition, the control unit 23 further includes an identification unit 46.

The camera 24 is a capturing device that captures an image. The camera 24 is provided at a location at which the face of the user is captured when the user refers to the display unit 20. For example, the camera 24 is provided around the display unit 20 of the read determination device 10 so as to face a direction that is similar to the display direction by the display unit 20. The camera 24 captures periodically an image at certain frame rate, and generates image information on the captured image. As such a frame rate, for example, there is 24 frames per second (fps), 30fps, 60fps, or the like.

The identification unit 46 performs various types of identification. For example, the identification unit 46 identifies an area that is gazed at by the user. For example, the identification unit 46 obtains a sight line direction of the user by identifying the positions of the pupils of the user from the image that is captured by the camera 24. In addition, the identification unit 46 identifies an area through which the sight line direction of the user passes, as the area that is gazed at by the user, from among the areas of the document that has been displayed on the display unit 20. In the embodiment, the area through which the sight line direction of the user passes is identified as the area that is gazed at by the user, but a method of identifying the area that is gazed at by the user is not limited to such an example. For example, an area of the position of a cursor may be set as the area that is gazed at by the user when the user moves the cursor on the document. In addition, the area of a portion selected by reverse display or the like on the document may be set as the area that is gazed at by the user when there is the portion selected by an operation of the user.

The measurement unit 44 measures a gazing time in which the user gazes at the area, for each of the areas. For example, the measurement unit 44 measures the gazing time of the area where the identification unit 46 identifies that the user gazes at, for each of the areas.

For each of the areas of the document, the determination unit 45 determines whether or not the document has been read by the user. For example, for each of the areas of the document, the determination unit 45 determines that the area of the document has been read by the user when the gazing time of the area, which has been measured by the measurement unit 44, is the total reading time of the area, or more.

As a result, the read determination device 10 may determine whether or not the document has been read by the user, for each of the areas of the document that is the read determination target.

### [Flow of Processing]

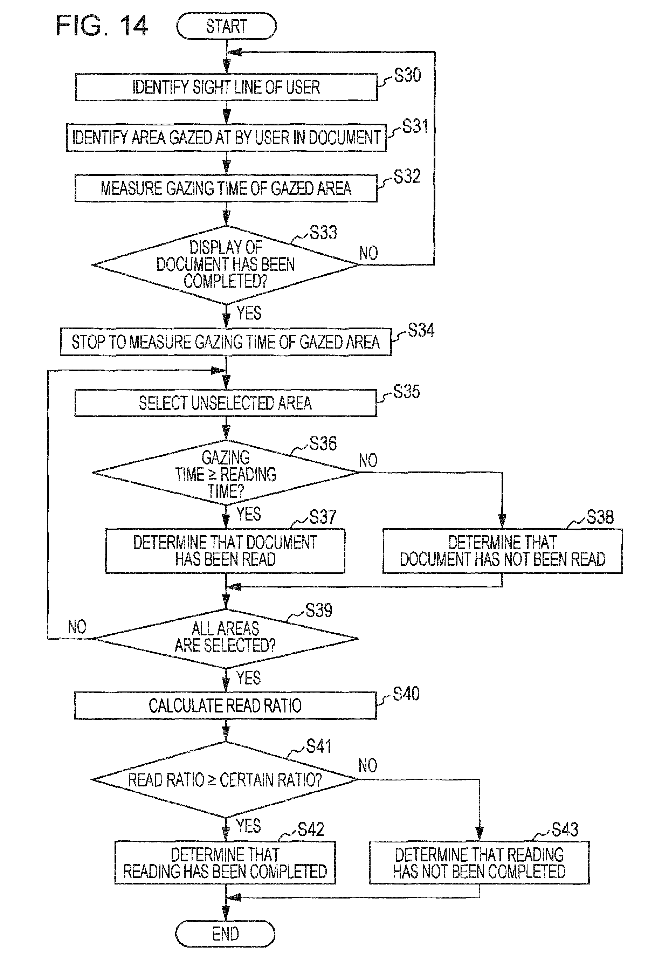

Flows of various pieces of processing that are executed by the read determination device 10 according to the embodiment are described below. FIG. 14 is a flowchart illustrating an example of a procedure of read determination processing. Such read determination processing is executed at certain timing, for example, timing at which a display instruction for the document data 30 has been executed.

As illustrated in FIG. 14, the identification unit 46 obtains the sight line direction of the user by identifying the positions of the pupils of the user, from the image that has been captured by the camera 24 (S30). The identification unit 46 identifies the area through which the sight line direction of the user passes, as the area that is gazed at by the user, in the document that has been displayed on the display unit 20 (S31). The measurement unit 44 measures a gazing time of the area through which the sight line direction of the user passes (S32). For example, the measurement unit 44 adds a specific time that corresponds to the reading time period, to the gazing time of the area through which the sight line direction of the user passes.

Here, in the reading of the document, the sight line repeatedly moves and stops, and the reading is performed at timing at which the sight line stops. The measurement unit 44 adds such specific time that corresponds to the reading time period, to the gazing time of the area through which the sight line direction of the user passes. Such specific time is, for example, 250 ms.

The measurement unit 44 determines whether or not the display of the document has been completed (S33). When the display of the document has not been completed (No in S33), the flow proceeds to the above-described processing of S30.

On the other hand, when the display of the document has been completed (Yes in S33), the measurement unit 44 stops to measure the gazing time (S34). The determination unit 45 selects one of the unselected areas (S35). For example, the determination unit 45 selects one of the unselected areas in order from the beginning side of the document. The determination unit 45 determines whether or not the gazing time of the selected area is the reading time of the area or more (S36). When the gazing time is the reading time or more (Yes in S36), the determination unit 45 determines that the document of the selected area of the document data 30 has been read by the user (S37). On the other hand, when the gazing time is less than the reading time (No in S36), the determination unit 45 determines that the document of the selected area of the document data 30 has not been read by the user (S38).

The determination unit 45 determines whether or not all of the areas of the document portion have been selected (S39). When not all of the areas have been selected (No in S39), the flow proceeds to the above-described processing of S35.

On the other hand, all of the areas of the document portion have been selected (Yes in S39), the determination unit 45 obtains a read ratio by dividing the number of areas which are determined to have been read by the user, by the total number of areas of the document (S40). The determination unit 45 determines whether or not the read ratio is a certain ratio or more (S41). Such a certain ratio is, for example, 90%. When the read ratio is the certain ratio or more (Yes in S41), the determination unit 45 determines that the document of the document data 30 has been read by the user (S42), and the processing ends.

On the other hand, when the read ratio is less than the certain ratio (No in S41), the determination unit 45 determines that the document of the document data 30 has not been read by the user (S43), and the processing ends.

### [Effects]

As described above, the read determination device 10 according to the embodiment divides the document that is the read determination target, into a plurality of areas. The read determination device 10 evaluates the readability of the document for each of the areas. For each of the divided areas, the read determination device 10 changes a criterion, and determines whether or not the document has been read, using the criterion that corresponds to the area. As a result, even when the readability of the document is different for each of the divided areas, the read determination device 10 may accurately determine whether or not the document has been read.

In addition, the read determination device 10 according to the embodiment measures the gazing time in which the user gazes at the document that is the determination target. The read determination device 10 determines that the document has been read when the gazing time in which the user gazes at the document that is the determination target satisfies the criterion. As a result, the read determination device 10 may accurately determine whether or not the user gazes at and reads the document actually.

### [Embodiment 3]

Embodiment 3 is described below. In Embodiment 3, a case is described below in which the read determination is performed by evaluating the readability of a document based on the content of the document.

### [Configuration of Read Determination Device]

A read determination device 10 according to Embodiment 3 is described below. The read determination device 10 according to Embodiment 3 has a functional configuration that is similar to that of the read determination device 10 (FIGs. 1 and 13) according to the above-described Embodiments 1 and 2, so that a portion that is different from the above-described Embodiments 1 and 2 is mainly described below.

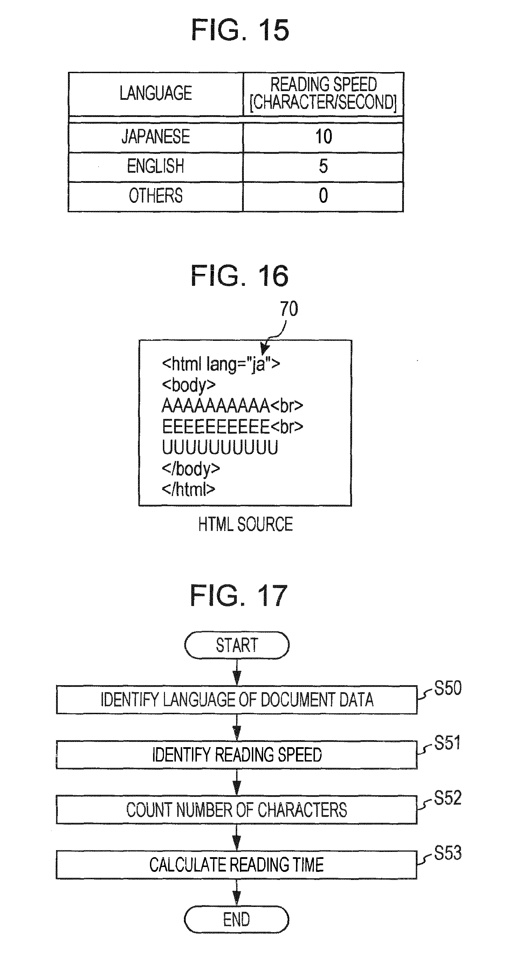

FIG. 15 is a diagram illustrating an example of criterion data. In the embodiment, the readability of the document is evaluated using the content of the document. In the embodiment, for example, a case is described in which a language that has been used for description of the document is used as the content of the document. The criterion data 31 illustrated in FIG. 15 is a table in which items of "language" and "reading speed" are associated with each other. The item of "language" is an area that stores a language that is used for description of the document. The item of "reading speed" is an area that stores information that indicates the reading speed when the document is read that is described with the language that has been set to the item of "language".

In the example of FIG. 15, it is indicated that 10 characters may be read per second when the language is Japanese. In addition, it is indicated that five characters may be read per second when the language is English. In addition, it is indicated that the read determination is not performed because the reading speed is zero character per second when the language is a further language. In the example of FIG. 15, the reading speed corresponds to the number of characters [character/second] that are read per second, but setting of the reading speed may be changed in accordance with a language. For example, in English or the like, the reading speed may correspond to the number of words [word/second] that are read per second.

The language that is used for description of the document is set in the document data 30, as appropriate. FIG. 16 is a diagram illustrating an example of document data to which a language is set. In the example of FIG. 16, the language that is used for description of the document is set in an area 70. Here, "ja" in FIG. 16 indicates the description in Japanese.

The evaluation unit 42 specifies a language that has been used for the description, from the document data 30. In the example of FIG. 16, the language that has been used for the description in the entire document is set as Japanese, so that the language that has been used for the description for all of the areas is determined as Japanese. The evaluation unit 42 may specify a language that has been used for the description by analyzing a sentence portion that is displayed in the document.

In addition, the evaluation unit 42 evaluates the readability of the document, from the language that has been used for the description of the document, based on the criterion data 31 illustrated in FIG. 15.

The case is described above in which the reading speed for each of the languages is obtained by setting the reading speed for each of the languages in the criterion data 31, but the embodiment is not limited to such an example. For example, the evaluation unit 42 may specify a language that the user understands, from setting of a language in the OS or a language that has been input by the user. For example, the evaluation unit 42 may obtain a degree of fluency for each of the languages that have been input by the user, from the speed of the input, and in the document that has been described with the language the fluency degree of which is high, the high reading speed may be set.

In addition, the content of the document which is used to evaluate the readability of the document is not limited to the language with which the document has been described, and anything that affects the readability of the document may be used as the content of the document. For example, the content of the document which is used to evaluate the readability includes a technical field that has been described in the document and a genre of the document. For the technical field that has been described in the document, for example, dictionary data that stores words that feature the field is stored for each technical field, and a technical field that includes a lot of words in the document is identified as the technical field of the document. In addition, for the genre of the document, similarly, for example, dictionary data that stores words that features the genre is stored for each genre, and a genre that includes a lot of words in the document is identified as the genre of the document.

### [Flow of Processing]

Flows of various pieces of processing that are executed by the read determination device 10 according to the embodiment are described below. FIG. 17 is a flowchart illustrating an example of a procedure of criterion setting processing. Such criterion setting processing is executed at certain timing, for example, timing at which a display instruction for the document data 30 has been executed.

As illustrated in FIG. 17, the evaluation unit 42 reads data of the document portion of the document data 30, and identifies a language that has been used for the description (S50). The evaluation unit 42 reads a reading speed that corresponds to the language that has been used for the description, from the criterion data 31 (S51).

The change unit 43 counts the number of characters that have been described in the document of the document data 30 (S52). The change unit 43 calculates a reading time by dividing the number of counted characters by the reading speed, and sets the reading time as a criterion (S53), and the processing ends.

When a language that has been used for the description is different for each of the areas of the document data 30, the reading speed is obtained by identifying a language that has been used for the description, for each of the areas, and a reading time for each of the areas is obtained, similar to Embodiments 1 and 2. In addition, the total reading time that is obtained by combining the reading times for the areas may be set as a criterion.

### [Effects]

As described above, the read determination device 10 according to the embodiment evaluates the readability of the document that is the determination target based on the content of the document. As a result, the read determination device 10 may accurately evaluate the readability of the document that is the determination target.

### [Embodiment 4]

Embodiment 4 is described below. In Embodiment 4, a case is described in which the read determination is performed by evaluating the readability of a document based on an environment under which the user reads the document.

### [Configuration of Read Determination Device]

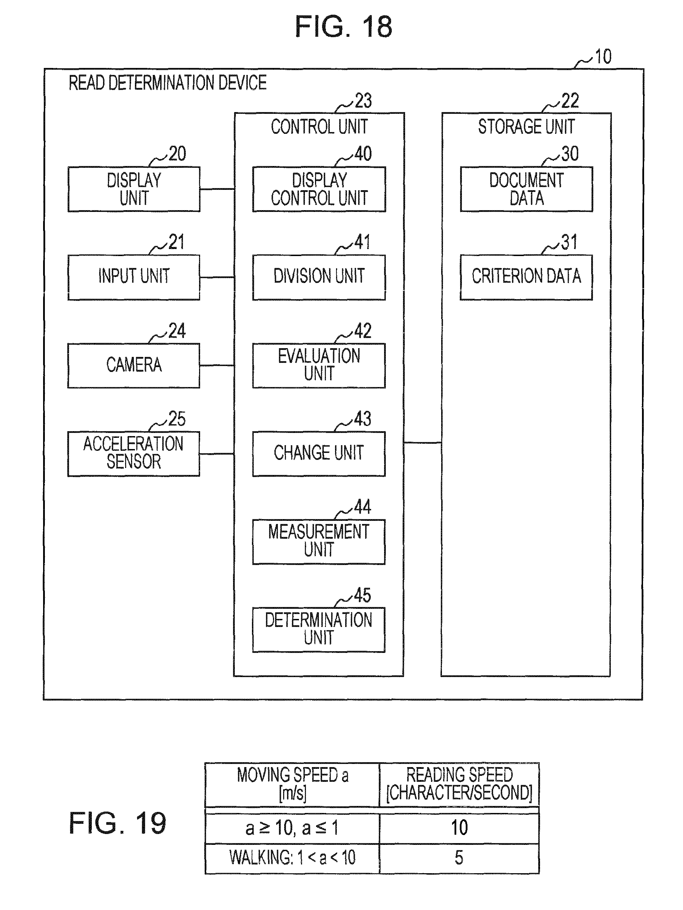

A read determination device 10 according to Embodiment 4 is described below. FIG. 18 is a block diagram illustrating a functional configuration of the read determination device. The same symbol is assigned to a portion that is similar to that of the read determination device 10 illustrated in FIGs. 1 and 13, and a portion that is different from the read determination device 10 illustrated in FIGs. 1 and 13 is mainly described below. As illustrated in FIG. 18, the read determination device 10 includes an acceleration sensor 25.

The acceleration sensor 25 measures an acceleration that has occurred in the read determination device 10.

Here, for example, when the user carries the read determination device 10, and reads a document that has been displayed on the display unit 20 during movement such as walking, it is difficult for the user to determine the characters due to vibration with the movement as compared with a case in which the user is in the stationary state, so that the reading speed is reduced. Therefore, in the embodiment, the readability is evaluated based on the environment under which the user reads the document.

FIG. 19 is a diagram illustrating an example of criterion data. In the embodiment, a case is described in which a moving speed is used as an environment under which the user reads the document, as an example. The criterion data 31 illustrated in FIG. 19 is a table in which items such as "moving speed" and "reading speed" are associated with each other. The item of "moving speed" is an area that stores the moving speed. The item of "reading speed" is an area that stores information that indicates the reading speed when the described document is read during the movement at the moving speed that has been set to the item of "moving speed".

In the example of FIG. 19, it is indicated that 10 characters may be read per second when the moving speed is 1 [m/s] or less, or 10 [m/s] or more. In addition, it is indicated that five characters may be read per second when the moving speed is larger than 1 [m/s], and less than 10 [m/s]. Here, when the user reads the document during walking, the reading speed is reduced due to the vibration. Therefore, in the embodiment, the reading speed is caused to be reduced by regarding a case in which the moving speed is larger than 1 [m/s] and less than 10 [m/s] as a case in which the user is walking. In addition, in the embodiment, the reading speed is not caused to be reduced by regarding a case in which the moving speed is 10 [m/s] or more, as a case in which, for example, the user is moving on a vehicle such as a train or a car.

The evaluation unit 42 estimates a moving speed of the read determination device 10, based on a change in an acceleration that has been detected by the acceleration sensor 25 and a time at which the acceleration has occurred. When the read determination device 10 includes a global positioning system (GPS) unit, and the GPS unit periodically identifies the position of the read determination device 10, the evaluation unit 42 may estimate the moving speed of the read determination device 10 from a change in the position of the read determination device 10, which is periodically identified.

In addition, the evaluation unit 42 evaluates the readability of the document, from the moving speed of the read determination device 10, based on the criterion data 31 illustrated in FIG. 19.

The environment that is used to evaluate the readability of the document is not limited to the moving speed of the read determination device 10, and anything that affects the readability of the document may be used as the environment. For example, the environment that is used to evaluate the readability of the document includes brightness of the surrounding. For example, brightness of the ambient is detected by the camera 24, a sensor, or the like, and when the surrounding is bright, the evaluation unit 42 may set the reading speed at high speed as compared with a case in which the surrounding is dark. In addition, a gyro sensor is provided in the read determination device 10, and the evaluation unit 42 may obtain an amount of device shake, from information through the gyro sensor, and set the reading speed at low speed when the amount of device shake is a certain value or more.

### [Flow of Processing]

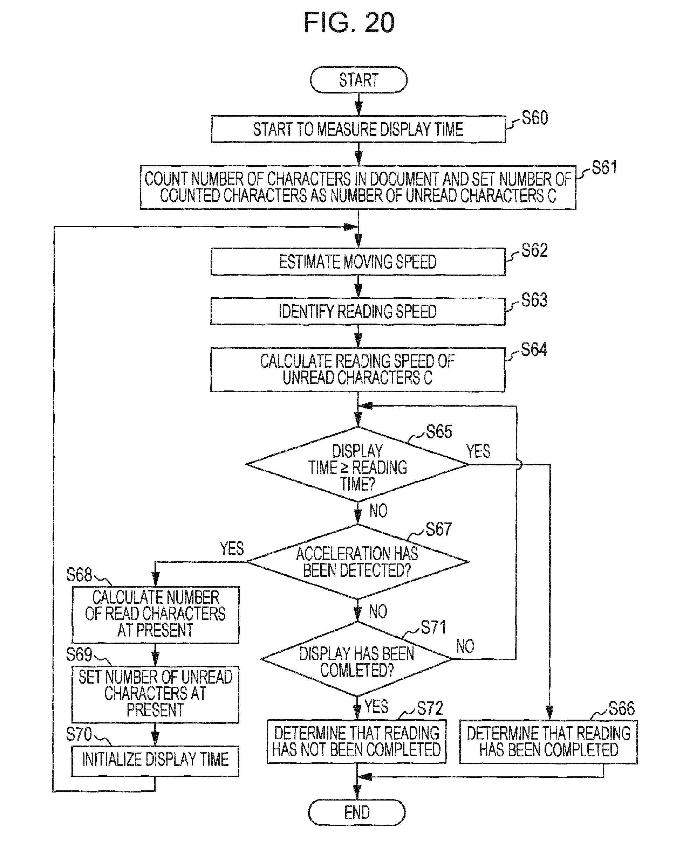

Flows of various pieces of processing that are executed by the read determination device 10 according to the embodiment are described below. FIG. 20 is a flowchart illustrating an example of a procedure of read determination processing. Such read determination processing is executed at certain timing, for example, timing at which a display instruction for the document data 30 has been executed.

As illustrated in FIG. 20, the measurement unit 44 starts to measure the display time (S60). The change unit 43 counts the number of characters that has been described in the document of the document data 30, and sets the number of counted characters as the number of unread characters c (S61). The evaluation unit 42 estimates a moving speed of the read determination device 10, based on a change in an acceleration that has been detected by the acceleration sensor 25 and a time at which the acceleration has occurred (S62). The evaluation unit 42 reads a reading speed that corresponds to the moving speed, from the criterion data 31 (S63). The change unit 43 calculates a reading time of the number of unread characters c by dividing the number of unread characters c by the reading speed (S64).

The determination unit 45 determines whether or not a display time that has been measured by the measurement unit 44 is the reading time or more (S65). When the display time is the reading time or more (Yes in S65), the determination unit 45 determines that the document of the document data 30 has been read by the user (S66), and the processing ends.

On the other hand, when the display time is less than the reading time (No in S65), the evaluation unit 42 evaluates whether or not an acceleration has been detected by the acceleration sensor 25 (S67). When an acceleration has been detected by the acceleration sensor 25 (Yes in S67), the change unit 43 calculates the number of read characters that are estimated at present by multiplying the display time up to the present, by the reading speed (S68). The change unit 43 sets a value that is obtained by subtracting the number of read characters estimated from the number of unread characters c, as the number of unread characters c that is newly set (S69). That is, when an acceleration has been detected, the moving speed is changed, so that the number of unread characters at present is obtained by subtracting the number of characters that are estimated to have been read up to the present from the number of unread characters. The change unit 43 initializes the display time that is being measured, at zero (S70), and the flow proceeds to the above-described processing of S62.

When an acceleration is not detected (No in S67), the measurement unit 44 determines whether or not the display of the document has been completed (S71). When the display of the document has not been completed (No in S71), the flow proceeds to the processing of S65.

When the display of the document has been completed (Yes in S71), the determination unit 45 determines that the document of the document data 30 has not been read by the user (S72), and the processing ends.

### [Effects]

As described above, the read determination device 10 according to the embodiment evaluates the readability of the document that is the determination target based on an environment under which the document is read. As a result, the read determination device 10 may accurately evaluate the readability of the document that is the determination target.

### [Embodiment 5]

The embodiments that are related to the device discussed herein are described above, but the discussed technology may be achieved in various different embodiments in addition to the above-described embodiments. Therefore, a further embodiment is described below.

For example, in the above-described embodiments, the case is described in which it is determined that the document has been read when the display time or the gazing time is the reading time or more, but the device discussed herein is not limited to the case. For example, even when the user causes the document to be displayed without seeing the screen, or even when the user sees the displayed document unclearly, it may be determined that the document has been read. Therefore, for example, an upper-limit time that is used to determine that the document has been read is set to the display time and the gazing time, and when the display time or the gazing time exceeds the upper-limit time, it may be determined that the document has not been read. For example, when the display time is the reading time or more and the upper-limit time or less, the determination unit 45 may determine that the document of the document data 30 has been read by the user. Such an upper-limit time is a time that is obtained by adding a time such as a certain ratio of a reading time or a specific time, to the reading time. For example, it is assumed that the upper-limit time is 1.5 times of the reading time. The time that is added to the reading time may be set externally. As a result, when the user causes the document to be displayed without seeing the screen, or when the user sees the displayed document unclearly, determination that the document has been read may be suppressed.

In addition, in the above-described embodiments, the case is described in which the readability is evaluated based on each of the appearance when the document that is the determination target is displayed, the content of the document that is the determination target, and the environment under which the document that is the determination target is read, but the readability of the document may be evaluated by combining any of the appearance, the content, and the environment. For example, the criterion data 30 may be created by combining the conditions of the appearance when the document that is the determination target is displayed, the content of the document that is the determination target, and the environment under which the document that is the determination target is read. In addition, the readability is evaluated based on each of the appearance when the document that is the determination target is displayed, the content of the document that is the determination target, and the environment under which the document that is the determination target is read, and the reading time may be set so as to fit the most illegible parameter. In addition, a reading speed may be obtained by evaluating the readability of the document based on each of the appearance when the document that is the determination target is displayed, the content of the document that is the determination target, and the environment under which the document that is the determination target is read, and the reading speed may be defined by certain weighting, and the reading time may be set.

In addition, the reading speed is different between a case in which the user reads the document quickly and a case in which the user peruses the document. For example, in the case in which the user reads document quickly, the movement of the sight line is reduced as compared with the case in which the user peruses the document. Therefore, for example, the state of the user is identified by detecting the movement of the sight line from an image that is periodically captured by the camera 24, and the reading speed may be changed in accordance with the state of the user. For example, the reading speed when the user reads document quickly and the reading speed when the user peruses the document are stored in the criterion data 31. In addition, the reading speed for quick reading may be used when the user reads the document quickly, and the reading speed for perusal may be used when the user peruses the document. In addition, for example, the reading speed for perusal is stored in the criterion data 31, and a reading speed may be used that is obtained by making the reading speed for perusal faster by a certain rate when the user reads document quickly.

In addition, the read determination device 10 according to the embodiment may evaluate the readability of the document based on whether or not an accessibility reference of a Web is satisfied. For example, when the accessibility reference is not satisfied, the read determination device 10 may set a determination reference that the document is read slowly as compared with a case in which the accessibility reference is satisfied.

In addition, each of the illustrated configuration elements in each of the devices is functionally conceptual, and may not be physically configured as illustrated in the figures. That is, the specific condition of distribution and integration of the devices is not limited to illustrated examples, and all or a part of the devices may be distributed or integrated functionally or physically in a given unit in accordance with various loads and usages. For example, the processing units such as the display control unit 40, the division unit 41, the evaluation unit 42, the change unit 43, the measurement unit 44, the determination unit 45, and the identification unit 46 of the read determination device 10 may be integrated as appropriate. In addition, the processing of each of the processing units may be divided into pieces of processing of a plurality of processing units as appropriate. In addition, each of the devices may integrate a part or all of the processing units as appropriate. In addition, all or a part of the processing functions that are respectively executed in the processing units may be achieved by a CPU and a program that is analyzed and executed by the CPU, or achieved as hardware by wired logic.

### [Read Determination Program]

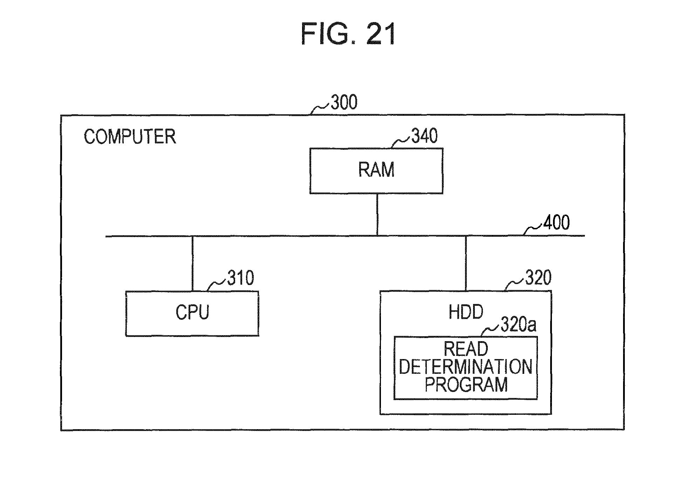

In addition, the various pieces of processing that are described in the above embodiments may be achieved by executing a program that has been prepared in advance in a computer system such as a personal computer or a workstation. Therefore, an example of a computer system that executes a program having a function that is similar to that of each of the above-described embodiments is described below. FIG. 21 is a diagram illustrating a computer that executes the read determination program.

As illustrated in FIG. 21, a computer 300 includes a CPU 310, a hard disk drive (HDD) 320, and a random access memory (RAM) 340. These units 300 to 340 are connected to each other through a bus 400.

A read determination program 320a that achieves a function that is similar to that of each of the processing units in the above-described read determination device 10 is stored in the HDD 320 in advance. The read determination program 320a may be divided into programs, as appropriate.

In addition, the HDD 320 stores various pieces of information. For example, the HDD 320 stores various pieces of data that are used for an OS and processing.

In addition, an operation that is similar to that of each of the processing units according to the embodiments is achieved by reading the read determination program 320a from the HDD 320 and executing the read determination program 320a through the CPU 310. That is, the read determination program 320a executes an operation that is similar to that of each of the processing units in the read determination device 10.

The above-described read determination program 320a may not be stored in the HDD 320 from the beginning.

For example, the program is stored in "portable physical medium" such as a flexible disk (FD), a compact disc-read-only memory (CD-ROM), a digital versatile disk (DVD), a magneto optical disk, or an integrated circuit (IC) card that is inserted into the computer 300. In addition, the computer 300 may execute the program by reading the program from "portable physical medium".

In addition, the program is stored in "further computer (or server)" that is connected to the computer 300 through a public line, the Internet, a local area network (LAN), a wide area network (WAN), or the like. The computer 300 may execute the program by reading the program from the further computer (or server).

## Claims

1. A read determination device comprising:
an evaluation unit that evaluates readability of a document that is a read determination target;
a change unit that changes a criterion that is used for read determination in accordance with an evaluation result by the evaluation unit; and
a determination unit that determines whether or not the document that is the determination target has already been read, using the criterion that is changed by the change unit.

2. The read determination device according to claim 1, wherein
the evaluation unit evaluates the readability of the document based on one or a plurality of conditions of an appearance when the document that is the determination target is displayed, a content of the document that is the determination target, and an environment under which the document that is the determination target is read.

3. The read determination device according to claim 1 further comprising:
a division unit that divides the document that is the read determination target into a plurality of areas, wherein
the evaluation unit evaluates the readability of the document for each of the areas that are divided by the division unit,
the change unit changes the criterion for each of the areas, and
the determination unit determines for each of the areas that are divided by the division unit whether or not the document has already been read using the criterion that corresponds to the area.

4. The read determination device according to claim 1, wherein
the determination unit determines that the document has already been read when a display time during which the document of the determination target is displayed satisfies the criterion.

5. The read determination device according to claim 1 further comprising:
a measurement unit that measures a gazing time during which the user gazes at the document of the determination target, wherein
the determination unit determines that the document has already been read when the gazing time in which the user gazes at the document of the determination target satisfies the criterion.

6. A read determination method causing a computer to execute processing, the processing comprising:
evaluating readability of a document that is a read determination target;
changing in accordance with an evaluation result a criterion that is used for read determination; and
determining whether or not the document that is the determination target has already been read using the changed criterion.

7. A read determination program causing a computer to execute processing, the processing comprising:
evaluating readability of a document that is a read determination target;
changing in accordance with an evaluation result a criterion that is used for read determination; and
determining whether or not the document that is the determination target has already been read using the changed criterion.
